# EUROPÄISCHE PATENTSCHRIFT

(11) **EP 0 853 772 B1**
(45) Veröffentlichungstag und Bekanntmachung des Hinweises auf die Patenterteilung: **27.06.2001**
(21) Anmeldenummer: 96937190.5
(22) Anmeldetag: 01.10.1996
(51) Int. Cl.: G02B 6/44

(54) **VERTEILER ZUM VERBINDEN VON LICHTLEITERN**
DISTRIBUTOR FOR CONNECTING LIGHT GUIDES
REPARTITEUR POUR LA CONNEXION DE GUIDES OPTIQUES

(30) Priorität: 06.10.1995 DE 19537290
(43) Veröffentlichungstag der Anmeldung: 22.07.1998
(73) Patentinhaber: SIEMENS AKTIENGESELLSCHAFT, 80333 München (DE)
(72) Erfinder: MAIR, Eduard, D-81477 München (DE)
(86) Internationale Anmeldenummer: DE9601884
(87) Internationale Veröffentlichungsnummer: WO9714069

(56) Entgegenhaltungen:
- EP-A- 0 211 208
- WO-A-95/20175
- DE-A- 3 724 977
- FR-A- 2 570 196
- GB-A- 2 292 466
- US-A- 4 418 982
- US-A- 5 448 675

## Beschreibung

Die Erfindung bezieht sich auf einen Verteiler zum Verbinden von ankommenden mit abgehenden Lichtleitern, an die Kupplungen angeschlossen sind, die an scheibenartig flachen Trägerteilen befestigbar sind, die in engem Teilungsabstand nebeneinander in einem Tragrahmen des Verteilers stapelartig aneinandergereiht sind.

Ein derartiger Verteiler ist z.B. durch die EP-A 0 211 208 bekannt geworden. Danach sind die scheibenartig flachen Trägerteile als Kassetten ausgebildet, die die Kupplungen tragen, mittels derer die ankommenden und die abgehenden Lichtleiter verbunden sind. Die Kassetten sind in einem Verteilergestell blockartig übereinandergestapelt und darin einschiebbar oder seitlich schwenkbar gelagert. Dadurch ist es möglich, die einzelnen Kassetten aus dem Verbund der anderen herauszulösen, um an die einzelnen z.B. als Stecker ausgebildeten Kupplungen heranzukommen. Bei der eingeschobenen Kassette müssen die herangeführten Lichtleiter Reserveschlaufen aufweisen, die dabei deformiert werden und entsprechend viel Raum benötigen. Die seitlich schwenkbaren Kassetten erfordern einen entsprechenden seitlichen Freiraum, der den Raumbedarf des Verteilers erhöht.

Nach der DE-A-37 24 977 wird ähnlich wie nach der US-A-4 418 982 jeweils eine Kupplung für Lichtwellenleiter mit einer Leitungsüberlänge in einer Folientasche aufgenommen bzw. auf einer Platte montiert. Eine Vielzahl der Taschen bzw. Platten ist auf einer Führungsschiene gehalten und in der Art einer Hängeregistratur derart verschiebbar geführt, daß für die jeweils zu handhabende Einheit durch Zusammenschieben der anderen Einheiten ein hinreichender Griffraum geschaffen werden kann.

Der Erfindung liegt die Aufgabe zugrunde, einen Verteiler für Lichtleiter zu schaffen, der wenig Raum beansprucht und bei dem die Lichtleiter nur geringfügig deformiert werden.

Diese Aufgabe wird durch die Erfindung gemäß Anspruch 1 gelöst. Durch die Verschiebbarkeit der Trägerteile auf den Führungsschienen ist es möglich, den Abstand zwischen den einzelnen Trägerteilen bis zur gegenseitigen Berührung zu verringern. Die gesamte freie Länge der Führungsschienen ist größer als die gesamte Breite der aneinandergereihten Trägerteile. Dadurch kann zwischen zwei einander benachbarten Trägerteilen ein freier Abstand geschaffen werden, der es ermöglicht, die einzelnen Kupplungen mit der Hand zu erreichen. Da der Freiraum beliebigen Trägerteilen zugeordnet werden kann, wird er nur einmal benötigt, so daß die gesamte Breite des Aufnahmerahmens gering bleibt.

Die Breite des Freiraums liegt im Bereich einer Handbreite und ist damit geringer als die Breite des Raumes der bei einem in der Scheibenebene verschiebbaren Trägerteil bereit gehalten werden muß. Der Verschiebeweg der einzelnen Trägerteile senkrecht zur Plattenebene ist entsprechend gering, so daß die ankommenden und abgehenden Lichtleiter nur wenig deformiert werden müssen.

Die einreihigen Trägerteile können in die Mitte des Freiraumes geschoben werden und sind so zur beidhändigen Bedienung von beiden Seiten her zugänglich. Dies ist vor allem bei mit Schrauben gesicherten Steckern von Vorteil. Die zweireihigen Trägerteile eignen sich insbesondere für einfache Stecker, die nicht verschraubt werden. Diese können dann je nach der gerade bedienten Reihe mit der dieser abgewandten Seite zum Anschlag gebracht werden.

Vorteilhafte Weiterbildungen der Erfindung sind in den Ansprüchen 2 bis 8 gekennzeichnet:

Durch die Weiterbildungen nach den Ansprüchen 2 und 3 sind die aufgefächerten Lichtleiterenden im wesentlichen senkrecht verlaufend angeordnet und entsprechend wenig gekrümmt. Die seitliche Verschiebbarkeit erfordert nur eine geringe Überlänge, so daß die Verlegebahnen der einzelnen Lichtleiter zwischen den Kupplungen und einem gebündelten Abschnitt relativ glatt verlaufen. Dadurch sind die Lichtleiterenden geordnet aufgefächert, ohne daß es dafür irgendwelcher Umlenk- oder Sortierhilfen bedarf, die das freie Arbeiten am Verteiler beeinträchtigen würden.

Durch die Weiterbildung nach Anspruch 4 kann das Trägerteil als einfache Platte ausgebildet werden, in die zu beiden Seiten der Hülsen Führungsbuchsen für die Führungsschienen eingesetzt sind. Der Verteiler weist damit einen einfachen stabilen Aufbau auf, bei dem die Führungsschienen nicht nur Führungsmittel sondern auch Tragelemente für die Trägerteile sind, wobei für alle Trägerteile nur zwei Führungsschienen benötigt werden. Die Hülsen können an dem Trägerteil z.B. durch Kleben in einem hinreichenden Teilungsabstand befestigt sein, der den gezielten Zugang zu den einzelnen Steckern ermöglicht.

Die Trägerteile nach Anspruch 5 können aus einfachem Plattenmaterial zugeschnitten werden. Die Hülsen können z.B. in einer einfachen Klebevorrichtung fest mit den Trägerteilen verbunden werden. Die Trägerteile weisen aufgrund ihrer Orientierung eine erhöhte Steifigkeit in der Steckrichtung auf, so daß die Steckkräfte ohne zusätzliche Abstützung aufgenommen werden können.

Das Trägerteil nach Anspruch 6 besteht aus einem einfachen Blechstreifen, bei dem die Durchbrüche und die Biegeform mit geringem Aufwand durch Stanzen erzeugt werden. Die hakenfömigen Enden sind dem Querschnitt der Führungsschienen angepaßt und spielarm geführt. Es entfallen somit z.B. die speziellen spanend bearbeiteten Führungsöffnungen von zusätzlichen Führungsbuchsen.

Die zusätzlichen Führungsschienen nach Anspruch 7 verhindern, daß die Trägerteile um ihre Längsachse versehentlich gekippt oder aus der Führung herausgehoben werden können. Durch das günstige Verhältnis zwischen der Breite des Trägerteils und der Materialdicke wird ein Verkanten zwischen den Führungsschienen vermieden.

Durch die Weiterbildung nach Anspruch 8 ist es möglich, die Kupplungen in engerem Abstand anzuordnen und einzeln aus der Ebene des Trägerteils herauszuheben, um sie besser handhaben zu können.

Ein Ausführungsbeispiel der Erfindung ist in der Zeichnung dargestellt und wird im folgenden näher erläutert:
- Figur 1: zeigt perspektivisch schematisiert einen Verteiler für Lichtleiter mit aneinandergereihten Trägerteilen,
- Figur 2: eine Frontansicht der Trägerteile mit den Lichtleitern nach Figur 1,
- Figur 3: eine perspektivische Ansicht eines anderen Verteilers für Lichtleiter mit anderen Trägerteilen

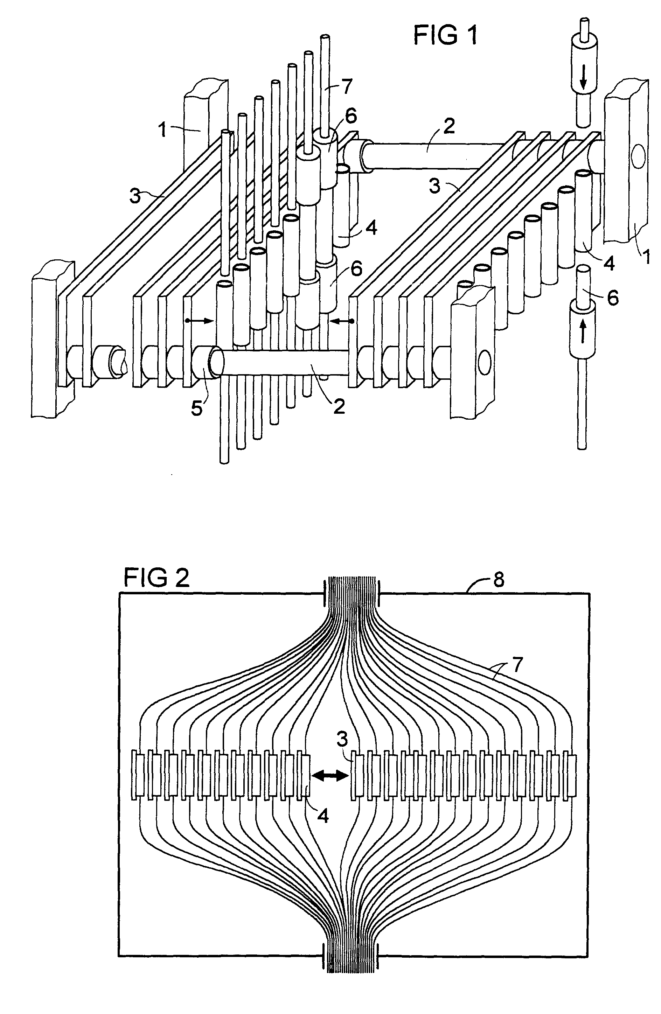

Nach Figur 1 weist ein Tragrahmen eines Verteilers zwei Paare von Rahmenteilen 1 auf, an denen zwei als Rundstangen ausgebildete Führungsschienen 2 mit ihren Enden befestigt sind. Scheibenartige Trägerteile 3 sind mit einer Reihe von nebeneinander angeordneten Hülsen 4 bestückt und an beiden Enden mit Führungsbuchsen 5 versehen, die Führungsöffnungen für die Führungsschienen 2 aufweisen. Auf diese ist eine Vielzahl der Trägerteile 3 nebeneinandergestapelt aufgesteckt. Die Gesamtdicke der bis zum Anschlag zusammengeschobenen Trägerteile ist um etwa eine Handbreit geringer als der freie Abstand zwischen den Rahmenteilen 1.

In die Hülsen 4 sind von beiden Enden her Stecker 6 eingesteckt, die an die Enden von ankommenden bzw. abgehenden Lichtleitern 7 angeschlossen sind. Diese sind von oben bzw. unten her an die senkrecht stehenden Hülsen 4 herangeführt. Die Überlänge der Führungsschienen 2 ermöglicht es, an beliebiger Stelle zwischen den Trägerteilen 3 einen Freiraum zu schaffen, in dem die Trägerteile 3 zu beiden Seiten dieses Freiraumes gegen die Rahmenteile 1 geschoben werden. Dieser Freiraum ist groß genug, um mit der Hand an die einzelnen Stecker 6 zu gelangen, um sie gemäß dem senkrechten Pfeil in die Hülse 4 hineinstecken zu können.

In Figur 2 ist schematisiert dargestellt, wie die Lichtleiter 7 gebündelt durch eine Kabeldurchführung eines Gehäuses 8 des Verteilers hindurchgeführt und von dort auf die einzelnen Trägerteile fächerartig aufgeteilt sind. Der Doppelpfeil im Mittelbereich zwischen den Trägerteilen 3 kennzeichnet den für die Handhabung zur Verfügung stehenden Freiraum. Dieser ist, gemessen an der Gesamtdicke der Trägerteile 3, so gering, daß die einzelnen Lichtleiter beim Verschieben der Trägerteile 3 nur geringfügig verformt werden. Die kompakte AnOrdnung der Trägerteile 3 ermöglicht es, den Fächerbereich der Lichtleiter relativ schmal zu halten, so daß die Gesamthöhe des Gehäuses 8 gering bleibt.

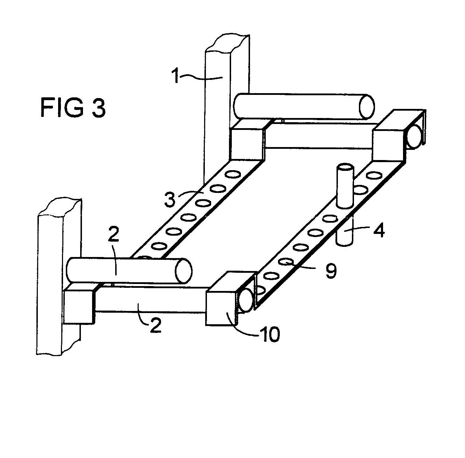

Der Verteiler nach Figur 3 unterscheidet sich vom dem nach Figur 1 im wesentlichen durch andere Trägerteile 3, die aus Blechstreifen gebildet sind deren Materialebene in der Stapelrichtung liegt. Die Trägerteile 3 weisen in ihrer Längsrichtung aneinander gereihte Durchbrüche 9 auf, in denen die Hülsen 4 fixiert sind. Die Hülsen können z.B. ein durchgehendes Außengewinde aufweisen und mittels zweier Muttern an den Trägerteilen befestigt werden.

Die Enden 10 der Trägerteile 3 sind hakenförmig um die Führungschienen 2 spielarm herumgebogen und somit an diesen gehalten und verschiebbar geführt. Ein zweites Paar der Führungsschienen 2 ist in einem der Materialdicke der Trägerteile 3 entsprechenden Abstand über dem anderen Paar angeordnet und verhindert das Verkanten und Verkippen um die Längsachse der Trägerteile 3. Die Materialebene im der Trägerteile 3 liegt unterhalb der Mittelachse der zylindrischen Führungsschienen, wodurch die Trägerteile 3 hängend gelagert und leichtgängig geführt sind.

## Patentansprüche

1. Verteiler zum Verbinden von ankommenden mit abgehenden Lichtleitern (7), die an Kupplungen (6) angeschlossen sind, bestehend aus einem Tragrahmen, aus in dem Tragrahmen in engem Teilungsabstand stapelartig an einandergereihten leistenartigen Trägerteilen (3) und aus an den Trägerteilen befestigten Hülsen
**dadurch gekennzeichnet,**
daß die Trägerteile (3) jeweils eine oder zwei Reihen von Kupplungen (6) halten, daß der Tragrahmen zumindest zwei sich in der Stapelrichtung erstreckende Führungsschienen (2) aufweist, an denen die Trägerteile (3) gehalten und verschiebbar geführt sind,
daß die Führungsschienen (2) an ihren Enden an Rahmenteilen (1) des Tragrahmens befestigt sind und
daß die freie Länge der Führungsschienen (2) zwischen den Rahmenteilen (1) um mindestens ca. eine Handbreite größer ist, als die gesamte Breite aller aneinander gestapelten Trägerteile (3) des Tragrahmens.

2. Verteiler nach Anspruch 1,
**dadurch gekennzeichnet**, daß die Hülsen so angeordnet sind
daß die ankommenden bzw. abgehenden Lichtleiter (7) von oben bzw. unten an das Trägerteil (3) herangeführt sind.

3. Verteiler nach Anspruch 2,
**dadurch gekennzeichnet,** daß die Hülsen als Teile von Kupplungen für senkrecht steckbare Steckverbindungen ausgebildet sind.

4. Verteiler nach Anspruch 1, 2 oder 3,
**dadurch gekennzeichnet,**
daß in die Hülsen (4) von beiden Enden her Stecker (6) beider Lichtleiter einsteckbar sind, und daß die Hülsen (4) an den Trägerteilen (3) nebeneinander befestigt sind.

5. Verteiler nach Anspruch 1, 2 oder 3,
**dadurch gekennzeichnet**,
daß die Trägerteile (3) als in der Steckrichtung senkrecht zur Stapelrichtung stehende Scheiben ausgebildet sind, an denen die Hülsen (4) flach anliegend befestigt sind, und
daß die Trägerteile (3) an beiden Enden mit Führungsöffnungen für die Führungsschienen (2)versehen sind.

6. Verteiler nach Anspruch 1, 2 oder 3,
**dadurch gekennzeichnet,**
daß die Trägerteile (3) als im wesentlichen flache Blechstreifen ausgebildet sind, deren Materialebene sich senkrecht zur Steckrichtung in der Stapelrichtung erstreckt,
daß die Trägerteile (3) in ihrer Längsrichtung aneinander gereihte Durchbrüche (9) aufweisen, in denen die Hülsen (4) fixiert sind, und
daß die Enden (10) der Trägerteile (3) hakenförmig spielarm um die Führungsschienen (2) herumgebogen, verschiebbar geführt und eingehängt sind.

7. Verteiler nach Anspruch 6,
**dadurch gekennzeichnet,**
daß an beiden Enden der Trägerteile 3 je zwei parallele Führungsschienen 2 übereinander angeordnet sind und
daß der freie Abstand zwischen den übereinanderliegenden Führungsschienen 2 der Materialdicke der Trägerteile 3 entspricht.

8. Verteiler nach Anspruch 1, 2 oder 3,
**dadurch gekennzeichnet,**
daß die Trägerteile rahmenartig ausgebildet sind und zu beiden Seiten, oberhalb oder unterhalb der Kupplungen Querstreben aufweisen, an denen die Lichtleiter lösbar fixiert sind, und
daß die Lichtleiter mit den angeschlossenen Kupplungen frei zwischen den beiden Querstreben verlaufend gehalten sind.

## Claims

1. Distributor for connecting incoming optical conductors (7) to outgoing optical conductors (7), which optical conductors (7) are connected to couplings (6), said distributor comprising a supporting frame, strip-like support parts (3) which are arranged in the supporting frame in a row like a stack with a short pitch distance between them, and sleeves mounted on the support parts,
characterized
in that the support parts (3) each hold one or two rows of couplings (6),
in that the supporting frame has at least two guide rails (2) which extend in the stack direction and on which the support parts (3) are held and are guided displaceably,
in that the guide rails (2) are mounted at their ends on frame parts (1) of the supporting frame, and
in that the free length of the guide rails (2) between the frame parts (1) is greater by at least approximately one hand width than the total width of all the support parts (3) of the supporting frame which are stacked against one another.

2. Distributor according to Claim 1,
characterized
in that the sleeves are arranged such that the incoming and outgoing optical conductors (7) are routed to the support part (3) from above and below, respectively.

3. Distributor according to Claim 2,
characterized
in that the sleeves, as parts of couplings, are designed for plug connections which can be mated vertically.

4. Distributor according to Claim 1, 2 or 3,
characterized
in that plugs (6) of both optical conductors can be inserted into the sleeves (4) from both ends, and in that the sleeves (4) are mounted adjacent to one another on the support parts (3).

5. Distributor according to Claim 1, 2 or 3,
characterized
in that the support parts (3) are designed as discs which are at right angles to the stack direction in the insertion direction and on which the sleeves (4) are mounted resting flat, and
in that the support parts (3) are provided at both ends with guide openings for the guide rails (2).

6. Distributor according to Claim 1, 2 or 3,
characterized
in that the support parts (3) are designed as essentially flat sheet-metal strips, the plane of whose material extends at right angles to the insertion direction in the stack direction,
in that the support parts (3) have perforations (9) which are arranged in a row in their longitudinal direction and in which the sleeves (4) are fixed, and
in that the ends (10) of the support parts (3) are bent around the guide rails (2) in the form of a hook with little play, are guided displaceably, and are hooked in.

7. Distributor according to Claim 6,
characterized
in that two parallel guide rails (2) are arranged one above the other at each of the two ends of the support parts (3), and
in that the free distance between the guide rails (2) which are located one above the other corresponds to the material thickness of the support parts (3).

8. Distributor according to Claim 1, 2 or 3,
characterized
in that the support parts are designed like a frame and have transverse struts on both sides, above and below the couplings, on which the optical conductors are detachably fixed, and
in that the optical conductors are held with the connected couplings such that they run freely between the two transverse struts.

## Revendications

1. Répartiteur pour relier des guides (7) de lumière qui arrivent à des guides (7) de lumière qui partent, qui sont raccordés à des accouplements, constitué d'un bâti de support, de pièces (3) de support du genre de réglettes, mis à la file en empilement, à une petite distance de séparation, dans le bâti de support, et de douilles fixées aux pièces de support, caractérisé en ce que les pièces (3) de support maintiennent chaque fois une ou deux rangées d'accouplement (6), en ce que le bâti de support comporte au moins deux rails (2) de guidage qui s'étendent dans la direction d'empilage et sur lesquels les pièces (3) de support sont maintenues et peuvent coulisser, en ce que les rails (2) de guidage sont fixés à leurs extrémités à des pièces (1) du bâti de support et en ce que la longueur libre des rails (2) de guidage entre les pièces (1) de bâti est supérieure d'au moins environ une largeur de main à la largeur totale de toutes les pièces (3) de support du bâti de support empilées les unes sur les autres.

2. Répartiteur suivant la revendication 1, caractérisé en ce que les douilles sont disposées de telle manière que les guides (7) de lumière arrivant et partant sont amenés du haut et du bas à la pièce (3) de support.

3. Répartiteur suivant la revendication 2, caractérisé en ce que les douilles sont réalisées sous la forme de parties d'accouplement pour des liaisons à enfilage vertical.

4. Répartiteur suivant la revendication 1, 2 ou 3, caractérisé en ce que des connecteurs (6) de deux guides de lumière peuvent être enfilés dans les douilles (4) des deux extrémités et en ce que les douilles (4) sont fixées côte à côte aux pièces (3) de support.

5. Répartiteur suivant la revendication 1, 2 ou 3, caractérisé en ce que les pièces (3) de support sont réalisées en disques qui sont, dans la direction d'enfilage, perpendiculaires à la direction d'empilement et sur lesquelles les douilles sont fixées en s'appliquant à plat, et en ce que les pièces (3) de support sont munies aux deux extrémités d'ouvertures de guidage pour les rails (2) de guidage.

6. Répartiteur suivant la revendication 1, 2 ou 3, caractérisé en ce que les pièces (3) de support sont réalisées en bandes de tôle sensiblement plates dont le plan de matériau s'étend perpendiculairement à la direction d'enfilage dans la direction d'empilement, en ce que les pièces (3) de support comportent des ouvertures (9) les unes derrière les autres dans leur direction longitudinale, dans lesquelles les douilles (4) sont immobilisées, et en ce que les extrémités (10) des pièces (3) de support sont repliées en forme de crochet; avec peu de jeu, autour des rails (2) de guidage, sont guidées à coulissement et sont suspendues.

7. Répartiteur suivant la revendication 6, caractérisé en ce qu'il est monté l'un au-dessus de l'autre aux deux extrémités des pièces (3) de support chaque fois deux rails (2) de guidage parallèles et en ce que la distance libre entre les rails (2) de guidage superposés correspond à l'épaisseur de matériau des pièces (3) de support.

8. Répartiteur suivant la revendication 1, 2 ou 3, caractérisé en ce que les pièces de support sont réalisées à la façon de cadres et comportent de part et d'autre, au-dessus ou au-dessous des accouplements, des barres transversales auxquelles les guides de lumière sont fixés de manière amovible et en ce que les guides de lumière comportant les accouplements raccordés sont maintenus de manière à s'étendre librement entre les deux barres transversales.
